# EUROPÄISCHE PATENTSCHRIFT

(11) **EP 4 046 049 B1**
(45) Veröffentlichungstag und Bekanntmachung des Hinweises auf die Patenterteilung: **05.11.2025**
(21) Anmeldenummer: 20792604.9
(22) Anmeldetag: 13.10.2020
(51) Int. Cl.: G06F 21/64, G06N 3/02

(54) **ABWEHRGENERATOR, VERFAHREN ZUR VERHINDERUNG EINES ANGRIFFS AUF EINE KI-EINHEIT UND COMPUTERLESBARES-SPEICHERMEDIUM**
ATTACK-DETERRENT GENERATOR, METHOD FOR PREVENTING AN ATTACK ON AN AI UNIT AND COMPUTER-READABLE STORAGE MEDIUM
GÉNÉRATEUR DE DISSUASION D'ATTAQUE, PROCÉDÉ DE PRÉVENTION D'UNE ATTAQUE SUR UNE UNITÉ D'IA ET SUPPORT DE STOCKAGE LISIBLE PAR ORDINATEUR

(30) Priorität: 14.10.2019 DE 102019127622
(43) Veröffentlichungstag der Anmeldung: 24.08.2022
(73) Patentinhaber: dSPACE GmbH, 33102 Paderborn (DE)
(72) Erfinder: ASSION, Felix, 10247 Berlin (DE); GRESSNER, Florens, Fabian, 10318 Berlin (DE); KRETSCHMER, Frank, 03048 Cottbus (DE); HINZE, Stephan, 12169 Berlin (DE)
(86) Internationale Anmeldenummer: PCT/EP2020/078725
(87) Internationale Veröffentlichungsnummer: WO 2021/074121

(56) Entgegenhaltungen:
- YANG SONG ET AL: "PixelDefend: Leveraging Generative Models to Understand and Defend against Adversarial Examples", ARXIV.ORG, CORNELL UNIVERSITY LIBRARY, 201 OLIN LIBRARY CORNELL UNIVERSITY ITHACA, NY 14853, 30 October 2017 (2017-10-30), XP081316172
- KATHRIN GROSSE ET AL: "On the (Statistical) Detection of Adversarial Examples", ARXIV.ORG, CORNELL UNIVERSITY LIBRARY, 201 OLIN LIBRARY CORNELL UNIVERSITY ITHACA, NY 14853, 21 February 2017 (2017-02-21), XP080747927
- CHENGZHI MAO ET AL: "Metric Learning for Adversarial Robustness", ARXIV.ORG, CORNELL UNIVERSITY LIBRARY, 201 OLIN LIBRARY CORNELL UNIVERSITY ITHACA, NY 14853, 3 September 2019 (2019-09-03), XP081472238
- REUBEN FEINMAN ET AL: "Detecting Adversarial Samples from Artifacts", ARXIV.ORG, CORNELL UNIVERSITY LIBRARY, 201 OLIN LIBRARY CORNELL UNIVERSITY ITHACA, NY 14853, 1 March 2017 (2017-03-01), XP080753554

## Beschreibung

Die Erfindung betrifft einen Abwehrgenerator zur dynamischen Generierung von mindestens einem KI-Verteidigungsmodul, ein Abwehrsystem gegen einen adversarialen Angriff auf eine KI-Einheit, ein Verfahren zur dynamischen Generierung von KI-Verteidigungsmodulen, ein Verfahren zur Verhinderung eines Angriffs auf eine KI-Einheit und ein computerlesbares-Speichermedium.

Die meisten nach dem Stand der Technik bekannten Verfahren des maschinellen Lernens sind anfällig für adversariale Störungen. Daraus folgt, dass Robustheit gegenüber adversarialen Störungen eine große Herausforderung bei der Entwicklung von Verfahren des maschinellen Lernens darstellt.

Eine adversariale Störung liegt vor, wenn zu klassifizierende Daten derart verändert worden sind, dass dem menschlichen Betrachter die Veränderung nicht auffällt, eine korrekte Klassifikation mittels einer KI-Einheit jedoch nicht mehr möglich ist. Somit kann es zu vielfacher Fehlklassifikation kommen.

Im Kontext von Bildklassifikation, zum Beispiel bei der Segmentierung von Bilddaten, kann eine adversariale Störung durch das Überlagern der Eingangsbilder mit einem Rauschen hervorgerufen werden. Dieses Rauschen kann derart in das Eingangsbild eingefügt werden, dass es für den menschlichen Betrachter nicht erkennbar ist.

Adversariale Störungen treten jedoch in der natürlichen Umgebung, d. h. in üblicherweise zur Verfügung gestellten Sensordaten, nicht auf. Eine Möglichkeit, bei der adversariale Störungen auftreten, ist bei einem Angriff auf eine KI-Einheit. Das bedeutet, dass ein Angreifer die der KI-Einheit zur Klassifikation übergebenen Daten derart verändert, dass diese nicht richtig klassifiziert werden können. Daraus ergeben sich insbesondere im Hinblick auf sicherheitskritische Anwendungen, wie das hochautomatisierte Fahren, große Sicherheitsrisiken.

Kommt es beispielsweise zu einer Fehlklassifikation beim hochautomatisierten Fahren, so kann ein Fahrzeug möglicherweise ein Stoppschild nicht oder falsch erkennen. Auch ist es möglich, dass ein Fahrzeug bei einer roten Ampel nicht hält und so eine große Gefahr für den restlichen Straßenverkehr darstellt.

Es ist also ein Ziel, die Gefahr von adversarialen Angriffen zu reduzieren. Hierzu gibt es vereinzelte Lösungsansätze, die jedoch reaktiv auf einen bestimmten Angriff zugeschnitten sind. Das bedeutet, dass bisher erst zum Zeitpunkt des Auftretens des Angriffs eine Gegenmaßnahme entwickelt werden kann.

Es ist jedoch bekannt, dass es eine unbegrenzte Anzahl möglicher Angriffe auf KI-Einheiten unter der Verwendung von adversarialen Störungen gibt.

Es ist daher Aufgabe der Erfindung, eine Möglichkeit zu schaffen, KI-Einheiten vor adversarialen Angriffen zu schützen. Insbesondere ist es Aufgabe der Erfindung, ein adversarialen Angriff zu identifizieren. Es ist weiter insbesondere Aufgabe der Erfindung, eine KI-Einheit robust gegenüber adversarialen Angriffen auszugestalten. Es ist ferner insbesondere Aufgabe der Erfindung, eine Möglichkeit zu schaffen, eine unbegrenzte Anzahl von Verteidigungsmodulen für KI-Einheiten zu generieren. Aus dem Stand der Technik sind die folgenden Dokumente relevant: YANG SONG ET AL: "PixelDefend: Leveraging Generative Models to Understand and Defend against Adversarial Examples",ARXIV.ORG; KATHRIN GROSSE ET AL: "On the (Statistical) Detection of Adversarial Examples",ARXIV.ORG; CHENGZHI MAO ET AL: "Metric Learning for Adversarial Robustness",ARXIV.ORG; REUBEN FEINMAN ET AL: "Detecting Adversarial Samples from Artifacts",ARXIV.ORG.

Diese Aufgabe wird gelöst durch einen Abwehrgenerator zur dynamischen Generierung von mindestens einem KI-Verteidigungsmodul nach Anspruch 1, ein Abwehrsystem gegen einen adversarialen Angriff auf eine KI-Einheit nach Anspruch 9, ein Verfahren zur dynamischen Generierung von KI-Verteidigungsmodulen nach Anspruch 10, ein Verfahren zur Verhinderung eines Angriffs auf eine KI-Einheit nach Anspruch 11 und ein computerlesbares-Speichermedium nach Anspruch 13.

Insbesondere wird die Aufgabe gelöst durch einen Abwehrgenerator zur dynamischen Generierung von mindestens einem KI-Verteidigungsmodul, das Folgende aufweisend:
- eine Kacheleinheit, die dazu ausgebildet ist, für Modelldaten mindestens eine Kachel zu bestimmen, wobei die Modelldaten einer KI-Einheit zugeordnet sind und die mindestens eine Kachel zumindest eine Teilmenge der Modelldaten angibt;
- eine Aggregationseinheit, die dazu ausgebildet ist, aggregierte Daten zu bestimmen, wobei die aggregierten Daten der mindestens einen Kachel mindestens eine, insbesondere mathematische, Kennzahl zuordnen;
- eine Verteilungseinheit, die dazu ausgebildet ist, eine Verteilungsfunktion für die aggregierten Daten zu bestimmen;
- eine Inferenzeinheit, die dazu ausgebildet ist, unter Verwendung der Verteilungsfunktion mindestens eine Inferenzkonfiguration zu bestimmen;
- eine Datentransformationseinheit, die dazu ausgebildet ist, unter Verwendung der mindestens einen Inferenzkonfiguration mindestens ein KI-Verteidigungsmodul für die KI-Einheit zu erzeugen, wobei das mindestens eine KI-Verteidigungsmodul dazu ausgebildet ist, für einen Eingangsdatensatz der KI-Einheit:
   o zu bestimmen, ob dem Eingangsdatensatz ein Angriff auf die KI-Einheit zugeordnet werden kann; und/oder
   o unter Verwendung einer Datentransformation einen zweiten Eingangsdatensatz zu bestimmen, dem kein Angriff auf die KI-Einheit zugeordnet werden kann.

Ein Kern der Erfindung ist, dass für Modelldaten eine Verteilungsfunktion bestimmt wird. Der Erfindung liegt die Annahme zugrunde, dass die Modelldaten einer Modellmannigfaltigkeit angehören. Anders ausgedrückt, dass die Modelldaten ein ähnliches statistisches Verhalten aufweisen. Somit ist es möglich, für einen Eingangsdatensatz, der beispielsweise Bilder einer RGB Kamera umfasst, festzustellen, ob die Daten des Eingangsdatensatz einem adversarialen Angriff zuzuordnen sind. Dies ist z. B. dann der Fall, wenn in dem Eingangsdatensatz statistische Auffälligkeiten festzustellen sind.

Darüber hinaus umfasst die Erfindung ebenfalls die Möglichkeit, für den Eingangsdatensatz einen zweiten Eingangsdatensatz zu bestimmen, der keine statistischen Auffälligkeiten aufweist und somit keinem Angriff auf die KI-Einheit zuzuordnen ist. Somit kann das Rauschen, welches durch den adversarialen Angriff in die Ursprungsdaten eingefügt wurde, wieder herausgefiltert werden.

Die Erfindung ist nicht auf eine bestimmte Art von KI-Einheit beschränkt. So ist es möglich, dass die KI-Einheit als ein künstliches neuronales Netz, als ein Bayes-Klassifkator, eine Markov-Logik-Einheit oder eine andere beliebige Art von Klassifikator ausgebildet ist.

Insgesamt wird durch die Erfindung eine Möglichkeit gegeben, Gegenmaßnahmen für beliebige adversariale Angriffe zu generieren. Diese Gegenmaßnahmen werden durch das Verteidigungsmodul für die KI-Einheit implementiert. Bei dem Verteidigungsmodul für die KI-Einheit kann es sich somit um ausführbaren Programmcode handeln. Dieser Programmcode kann in kompilierter Form oder in nicht kompilierter Form vorliegen. Auch ist es denkbar, dass das Verteidigungsmodul für die KI-Einheit als ein Add-On für die KI-Einheit eingesetzt wird. So kann vor einer Klassifikations- oder Regressionsaufgabe das Verteidigungsmodul für die KI-Einheit durch die KI-Einheit eingesetzt werden, um festzustellen, ob ein Angriff auf die KI-Einheit vorliegt und diesen durch eine Datentransformation unschädlich machen.

Die Modelldaten können beispielsweise als ein Tensor ausgebildet sein. Die mindestens eine Kachel kann eine Teilmenge des Tensors bilden. Beispielsweise kann die mindestens eine Kachel einen eindimensionalen Tensor darstellen, der einen Teilausschnitt einer Dimension des Tensors der Modelldaten umfasst. Die Modelldaten können ein oder mehrdimensional ausgebildet sein.

In einer Ausführungsform können die Modelldaten als ein Bild mit mindestens einem Farbkanal, insbesondere drei Farbkanälen, vorzugsweise Rot-Grün-Blau, ausgebildet sein.

Wenn die Modelldaten als ein Bild ausgebildet sind, dann kann die mindestens eine Kachel einen Bildausschnitt eines jeweiligen Farbkanals angeben.

Mit der beschriebenen Ausführungsform werden lokale Abhängigkeiten ausgenutzt. So können Modelldaten in eine Vielzahl von Kacheln unterteilt werden, die zusammen eine Kachelmenge bilden.

Zum Beispiel bestehen zwischen den Werten von nah beieinanderliegenden Pixeln eines Bildes Abhängigkeiten. Ist die Distanz zwischen zwei Pixeln sehr groß, so besteht fast keine Abhängigkeit mehr. Ebenso besteht zwischen Buchstaben eines Wortes eine große Abhängigkeit. Zwischen den Buchstaben unterschiedlicher Wörter oder sogar unterschiedlicher Absätze hingegen besteht kaum eine Abhängigkeit. Somit ist es möglich, unterschiedliche Kacheln der Eingangsdaten separat zu verarbeiten. Dies ermöglicht eine Parallelisierung und somit eine effizientere Ausführung.

In einer Ausführungsform kann die Kacheleinheit dazu ausgebildet sein, eine Kachelangabe zu empfangen, wobei die Kachelangabe insbesondere benutzerdefinierbar sein kann, wobei die Kachelangabe bevorzugt eine Kernelgröße, einen Stride und/oder einen Versatz angeben kann, und wobei die Kacheleinheit dazu ausgebildet sein kann, die mindestens eine Kachel unter Verwendung der Kachelangabe zu bestimmen

Die Kernelgröße kann die Größe der mindestens einen Kachel angeben, insbesondere kann die Kernelgröße eine Angabe für die x-Achse, eine Angabe für die y-Achse und/oder eine Angabe für die z-Achse umfassen. Der Stride oder Schrittweite kann angeben, in welcher Schrittweite eine neue Kachel beim Scannen des Eingangsdatensatzes erzeugt wird. Der Versatz kann derart definiert sein, dass durch einen Versatz um die Schrittweite keine Kachel erzeugt wird, die kleiner ist als die übrigen Kacheln. Dies könnte der Fall sein, wenn zum Beispiel ein Eingangsbild mit einer Größe von 10 × 10 Pixeln mit einem Kernel der Größe 3 x 3 Pixel gescannt wird, für den eine Schrittweite von drei Pixeln definiert ist. In diesem Fall ist ein Versatz von zwei Pixeln notwendig.

In einer Ausführungsform können die Modelldaten Bilddaten, Audiodaten, Sensordaten, Textdaten und/oder mindestens einen Merkmalsdetektor eines künstlichen neuronalen Netzwerks angeben.

Die Modelldaten können unterschiedlichste Daten umfassen. So sind neben den schon angesprochenen Bilddaten auch Sprachdaten, Sensordaten oder Textdaten möglich. Es ist jedoch auch möglich, anstelle von den zu klassifizierenden Daten, Teile einer KI-Einheit als Modelldaten zu verwenden.

So hat sich gezeigt, dass adversariale Störungen zu ungewöhnlichen Mustern in Aktivierungsfunktionen eines künstlichen neuronalen Netzwerks führen.

Somit ist es vorgesehen, dass in einer Ausführungsform Merkmalsdetektoren eines künstlichen neuronalen Netzwerks, insbesondere eines Convolutional Neural Network, die Modelldaten bilden können.

In einer Ausführungsform kann die Aggregationseinheit dazu ausgebildet sein, eine, insbesondere benutzerdefinierbare, Aggregationsangabe zu empfangen, wobei die Aggregationsangabe und/oder die mindestens eine Kennzahl jeweils eine Singulärwertzerlegung, eine Faltung, einen Mittelwert, einen Median und/oder eine Varianz für die mindestens eine Kachel angeben kann und wobei die Aggregationseinheit dazu ausgebildet sein kann, die aggregierten Daten unter Berücksichtigung der Aggregationsangabe zu bestimmen.

Mit der beschriebenen Ausführungsform ist es möglich, dass die Aggregationseinheit dazu ausgebildet ist, die Daten des Eingangsdatensatzes z. B. mit einem Filter zu falten, um die aggregierten Daten zu bestimmen. Dies kann durch eine diskrete Fourier-Transformation und eine anschließende Multiplikation und darauffolgende Integration implementiert sein, sodass die Faltung einer Multiplikation mit anschließender Integration im Frequenzspektrum entspricht.

In einer Ausführungsform kann die Aggregationseinheit dazu ausgebildet sein, eine Singulärwertzerlegung für die mindestens eine Kachel auszuführen. In solchen Fällen, in denen eine Kachel mehr als eine Dimension aufweist, kann die Kachel als eine Blockmatrix dargestellt werden, wobei jeder Block der Blockmatrix einer Dimension der mindestens einen Kachel entspricht.

Es hat sich gezeigt, dass adversariale Störungen insbesondere in den niedrigeren Singulärwerten einer Matrix ungewöhnliche Muster erzeugen. Somit kann durch eine Singulärwertzerlegung eine adversariale Störung in den Modelldaten erkannt werden.

In einer Ausführungsform ist es weiterhin möglich, den Mittelwert, den Median und/oder eine Varianz für die mindestens eine Kachel zu bestimmen. Die aggregierten Daten können in diesem Fall als ein Vektor von statistischen Werten ausgebildet sein.

In einer Ausführungsform kann die Aggregationseinheit dazu ausgebildet sein, eine/die Kachelangabe von der Kacheleinheit zu empfangen, wobei die Aggregationseinheit zum Bestimmen der aggregierten Daten dazu ausgebildet sein kann, die Kachelangabe von der mindestens einen Kachel zu subtrahieren.

Die mindestens eine Kachel kann eine Vielzahl von Werten angeben. Zum Beispiel kann eine Kachel eine Vielzahl von Helligkeitswerten angeben. Es ist ebenso möglich, dass eine Kachel eine Vielzahl von Buchstaben angeben kann, sodass eine Kachel eine Textpassage angeben kann.

Es ist in der oben beschriebenen Ausführungsform ebenso angedacht, einen Median, eine Varianz oder einen Mittelwert von der mindestens einen Kachel abzuziehen. Wenn mehr als eine Kachel vorgesehen ist, dann kann das Subtrahieren der genannten Werte von einer Kachel bedeuten, dass wenn die mindestens eine Kachel als ein Tensor ausgebildet ist, von jedem Datenelement des Tensors der Mittelwert und/oder der Median über alle Kacheln/Tensoren subtrahiert wird. Der Median, die Varianz und/oder der Mittelwert kann dabei über sämtliche Datenelemente der mindestens einen Kachel bzw. des Tensors oder über alle Kacheln/Tensoren bestimmt sein.

Das Subtrahieren von statistischen Werten hat den Vorteil, dass damit die Kacheln unterschiedlicher Regionen vergleichbar werden.

In einer Ausführungsform kann der Abwehrgenerator dazu ausgebildet sein, eine, insbesondere benutzerdefinierbare, Zieldefinition zu empfangen, wobei die Inferenzeinheit dazu ausgebildet sein kann, die Inferenzkonfiguration unter Berücksichtigung der Zieldefinition zu bestimmen.

Dabei kann die Datentransformationseinheit dazu ausgebildet sein, unter Berücksichtigung der Inferenzkonfiguration auszuwählen, ob eine Bestimmung, ob einem Eingangsdatensatz ein Angriff auf die KI-Einheit zugeordnet werden kann oder eine Bestimmung unter Verwendung der Datentransformation eines zweiten Eingangsdatensatzes, dem kein Angriff auf die KI-Einheit zugeordnet werden kann, ausgeführt wird.

Mit der Zieldefinition ist es somit möglich, das Verhalten der KI-Verteidigungsmodule zu steuern. Somit wird eine einfachere Möglichkeit bereitgestellt, dass durch Benutzer das Verhalten der KI-Verteidigungsmodule festgelegt werden kann.

In einer Ausführungsform kann die Verteilungseinheit dazu ausgebildet sein, eine, insbesondere benutzerdefinierbare, Verteilungsangabe zu empfangen, wobei die Verteilungseinheit ferner dazu ausgebildet sein kann, unter Berücksichtigung der Verteilungsangabe die Verteilungsfunktion zu bestimmen, wobei die Verteilungsangabe eine explizite oder implizite Verteilungsfunktion angeben kann.

Es ist also möglich, dass durch die Verteilungsangabe eine Berechnungsmethode für eine Wahrscheinlichkeitsverteilung angegeben wird, sodass die Datenverteilung eine Wahrscheinlichkeitsverteilung angibt. Dabei kann eine implizite oder eine explizite Verteilungsfunktion durch die Verteilungsangabe angegeben sein.

Bei einer expliziten Verteilungsfunktion kann eine Übergangsmatrix bestimmt werden. Die Übergangsmatrix kann z.B. eine Markovkette (Markov Chain) angeben. Auch ist es denkbar, dass eine Gibbs-Verteilung durch eine explizite Verteilungsfunktion bestimmt wird.

Die Matrixelemente einer Übergangsmatrix können jeweils zu einem Datum der aggregierten Daten korrespondieren. Eine Übergangsmatrix kann für jedes Matrixelement eine Wahrscheinlichkeit oder eine Wahrscheinlichkeitsverteilung angeben, dass das korrespondierende Matrixelement einen bestimmten Wert annimmt. So ist denkbar, dass, wenn der Eingangsdatensatz Bilddaten angibt, jedem Pixel eine Wahrscheinlichkeit zugeordnet wird, dass ein benachbarter Pixel einen bestimmten Helligkeitswert aufweist.

Eine implizite Verteilungsfunktion kann z. B. durch Quilts oder eine natürliche Aggregation implementiert sein. Bei der Methode mit Quilts wird eine Distanz von Eingangsdaten zu den Modelldaten bestimmt. Zum Beispiel kann die L²-Metrik oder eine andere Metrik zur Bestimmung der Distanz verwendet werden. Wenn der Abstand größer als ein vorgegebener Schwellwert ist, dann kann auf einen Angriff auf die KI-Einheit geschlossen werden. Darüber hinaus ist es möglich, eine Kachel der Eingangsdaten, basierend auf der verwendeten Metrik, mit der nächstliegenden Kachel der Modelldaten zu ersetzen, um so den zweiten Eingangsdatensatz zu bestimmen. In diesem Fall weisen die Modelldaten keine adversarialen Störungen mehr auf, sodass eine ungestörte Kachel in den Eingangsdaten ersetzt werden kann.

In einer Ausführungsform kann die Inferenzeinheit dazu ausgebildet sein, mindestens einen, insbesondere benutzerdefinierbaren, Schwellwert zu empfangen und die Bestimmung der Inferenzkonfiguration kann unter Berücksichtigung des mindestens einen Schwellwerts ausgeführt werden, wobei der mindestens eine Schwellwert angeben kann, dass bei Überschreiten des mindestens einen Schwellwerts eine Datentransformation durch das KI-Verteidigungsmodul ausgeführt wird.

Der Schwellwert kann in einer Ausführungsform z. B. wie vorstehend beschrieben mit einer Distanz verglichen werden. Das bedeutet, das KI-Verteidigungsmodul kann dazu ausgebildet sein, den Schwellwert mit einer Distanz zwischen Eingangsdaten bzw. einer Kachel, die eine Teilmenge der Eingangsdaten angeben kann und der mindestens einen Kachel zu vergleichen.

Das KI-Verteidigungsmodul kann in einer Ausführungsform ferner dazu ausgebildet sein, basierend auf dem Vergleich, die Datentransformation auszuführen, z. B. wenn die Distanz größer als der Schwellwert ist.

In einer Ausführungsform kann die KI-Verteidigungseinheit dazu ausgebildet sein, basierend auf dem Vergleich, zu bestimmen, ob dem Eingangsdatensatz ein Angriff auf die KI-Einheit zugeordnet werden kann, z. B. wenn die Distanz größer als der Schwellwert ist.

Neben der Distanz ist es ebenso denkbar, dass die KI-Verteidigungseinheit dazu ausgebildet ist, für die Modelldaten einen sogenannten Overall Probability Value zu bestimmen. Der Vergleich kann dann mit dem Overall Probability Value ausgeführt werden.

In einer Ausführungsform kann die KI-Verteidigungseinheit zum Erzeugen der zweiten Eingangsdaten dazu ausgebildet sein, basierend auf dem Vergleich eine Glättung der Eingangsdaten bzw. der mindestens einen Kachel auszuführen. Eine Glättung der Eingangsdaten bzw. der mindestens einen Kachel kann dazu führen, dass die adversariale Störung keinen Einfluss mehr auf die KI-Einheit hat.

In einer Ausführungsform kann die Inferenzeinheit dazu ausgebildet sein, eine Rekonstruktionsangabe zu empfangen, wobei die Inferenzeinheit dazu ausgebildet sein kann, die Inferenzkonfiguration unter Berücksichtigung der Rekonstruktionsangabe zu bestimmen, wobei die Rekonstruktionsangabe angeben kann, ob eine Datentransformation die gesamten Modelldaten, eine zufällige Teilmenge der Modelldaten und/oder eine wichtigkeitsbasierte Auswahl der Modelldaten betrifft.

Es ist mit der beschriebenen Ausführungsform somit ebenso möglich, nur einen Teil der Eingangsdaten zu rekonstruieren. Damit kann die Vorrichtung insgesamt effizienter arbeiten. Auch können Fehler vermieden werden, wenn nur ein Teil der Eingangsdaten berücksichtigt werden muss.

So kann die KI-Verteidigungseinheit in einer Ausführungsform dazu ausgebildet sein, Eingangsdaten, wie vorstehend beschrieben, in mindestens eine Kachel zu zerlegen. Bei der Rekonstruktion können nur bestimmte Kacheln berücksichtigt werden. So können bei Bilddaten einzelne Bildbereiche separat geprüft werden, sodass für diese Bildbereiche jeweils, insbesondere mathematische, Kennzahlen durch die KI-Verteidigungseinheit berechnet werden. Diese Ausführungsform trägt dem Umstand Rechnung, dass zum Beispiel ein Himmel mit homogenem Blau im mathematisch-visuellen Durchschnitt andere Eigenschaften aufweist, als zum Beispiel ein Bildbereich, der eine Straße zeigt. Die Bildbereiche, bzw. die zu diesen Bildbereichen korrespondierenden Kacheln, können statisch festgelegt sein. Es ist weiter denkbar, dass die Bildbereiche bzw. Kacheln dynamisch unter Berücksichtigung von Bildeigenschaften durch die KI-Verteidigungseinheit bestimmt werden.

In einer Ausführungsform weist der zweite Eingangsdatensatz keine adversarialen Störungen auf. Das bedeutet, dass eine KI-Einheit mit den zweiten Eingangsdaten wie vorgesehen funktioniert.

In einer Ausführungsform kann eine/die Datentransformation als ein Samplingverfahren ausgebildet sein.

Unter Verwendung eines Samplingverfahrens ist es möglich, den zweiten Eingangsdatensatz zu bestimmen, sodass keine adversariale Störung mehr in dem zweiten Eingangsdatensatz vorhanden ist.

Die Aufgabe wird ferner insbesondere gelöst durch ein Abwehrsystem gegen einen adversarialen Angriff auf eine KI-Einheit, Folgendes aufweisend:
- eine Eingabeeinheit, die dazu ausgebildet ist, Eingangsdaten und/oder ein Eingangsmodell als Modelldaten zu empfangen;
- einen Abwehrgenerator, insbesondere wie er vorstehend beschrieben ist, der dazu ausgebildet ist, die Modelldaten zu empfangen und mindestens ein KI-Verteidigungsmodul zu erzeugen;
- eine KI-Einheit, die dazu ausgebildet ist, das mindestens eine KI-Verteidigungsmodul vor Ausführung einer Regression und/oder Klassifikation zu verwenden, um
   o zu bestimmen, ob einem Eingangsdatensatz der KI-Einheit ein Angriff auf die KI-Einheit zugeordnet werden kann; und/oder
   o unter Verwendung einer Datentransformation einen zweiten Eingangsdatensatz zu bestimmen, dem kein Angriff auf die KI-Einheit zugeordnet werden kann und den zweiten Eingangsdatensatz bei der Regression und/oder Klassifikation zu verwenden.

Es ist daher ebenso angedacht, dass mindestens ein vom Abwehrgenerator erzeugtes KI-Verteidigungsmodul zur Abwehr eines Angriffs auf eine KI-Einheit in einem Abwehrsystem eingesetzt wird. Somit kann auf effiziente und sichere Art und Weise verhindert werden, dass ein Angriff auf eine KI-Einheit ausgeführt wird.

Die Aufgabe wird ebenfalls insbesondere gelöst durch ein Verfahren zur dynamischen Generierung von KI-Verteidigungsmodulen, folgende Schritte aufweisend:
- Bestimmen von mindestens einer Kachel für Modelldaten, wobei die Modelldaten einer KI-Einheit zugeordnet sind und die mindestens eine Kachel zumindest eine Teilmenge der Modelldaten angibt;
- Bestimmen von aggregierten Daten, wobei den aggregierten Daten der mindestens einen Kachel, insbesondere mathematische, Kennzahlen zugeordnet werden;
- Bestimmen einer Verteilungsfunktion für die aggregierten Daten;
- Bestimmen mindestens einer Inferenzkonfiguration unter Verwendung der Verteilungsfunktion;
- Erzeugen mindestens eines KI-Verteidigungsmoduls für die KI-Einheit unter Verwendung der mindestens einen Inferenzkonfiguration, wobei das mindestens eine KI-Verteidigungsmodul insbesondere dazu ausgebildet ist, für einen Eingangsdatensatz der KI-Einheit:
   o zu bestimmen, ob dem Eingangsdatensatz ein Angriff auf die KI-Einheit zugeordnet werden kann; und/oder
   o unter Verwendung einer Datentransformation einen zweiten Eingangsdatensatz zu bestimmen, dem kein Angriff auf die KI-Einheit zugeordnet werden kann.

In einer Ausführungsform kann das Verfahren ein Empfangen einer, insbesondere benutzerdefinierten, Kachelangabe umfassen, wobei die Kachelangabe insbesondere benutzerdefinierbar sein kann, wobei die Kachelangabe bevorzugt eine Kernelgröße, einen Stride und/oder einen Versatz angeben kann.

Dabei kann das Bestimmen der mindestens einen Kachel unter Verwendung der Kachelangabe bestimmt werden. Die Kernelgröße kann unter Berücksichtigung der Funktionsweise einer KI-Einheit gewählt sein. So kann die Kernelgröße derart gewählt sein, dass die Funktionsweise der KI-Einheit durch ein Ersetzen einer Kachel in den Eingangsdaten der KI-Einheit durch ein KI-Verteidigungsmodul, nicht beeinträchtigt wird.

In einer Ausführungsform kann das Verfahren ein Empfangen einer Aggregationsangabe umfassen, wobei die Aggregationsangabe eine/die mindestens eine Kennzahl für die mindestens eine Kachel angeben kann, wobei die mindestens eine Kennzahl jeweils eine Singulärwertzerlegung, eine Faltung, einen Mittelwert, einen Median und/oder eine Varianz für die mindestens eine Kachel angeben kann.

In einer Ausführungsform kann das Bestimmen der aggregierten Daten ein Subtrahieren einer/der mathematische Kennzahl von der mindestens einen Kachel umfassen.

In einer Ausführungsform kann das Verfahren umfassen:
- Empfangen einer, insbesondere benutzerdefinierten, Zieldefinition;
- Bestimmen der Inferenzkonfiguration unter Berücksichtigung der Zieldefinition.

In einer Ausführungsform kann das Verfahren ein Empfangen einer, insbesondere benutzerdefinierten, Aggregationsangabe umfassen, wobei die mindestens eine Kennzahl und/oder die Aggregationsangabe jeweils eine Singulärwertzerlegung, eine Faltung, einen Mittelwert, einen Median und/oder eine Varianz für die mindestens eine Kachel angeben kann, wobei das Bestimmen der aggregierten Daten unter Berücksichtigung der Aggregationsangabe ausgeführt werden kann.

In einer Ausführungsform kann das Bestimmen der aggregierten Daten ein Subtrahieren einer/der Aggregationsangabe von der mindestens einen Kachel umfassen.

In einer Ausführungsform kann das Verfahren ein Empfangen einer, insbesondere benutzerdefinierten, Zieldefinition umfassen, wobei das Bestimmen der Inferenzkonfiguration unter Berücksichtigung der Zieldefinition ausgeführt werden kann.

Ferner kann das Verfahren ein Auswählen unter Berücksichtigung der Inferenzkonfiguration umfassen, insbesondere ob eine Bestimmung ausgeführt wird, ob dem Eingangsdatensatz ein Angriff auf die KI-Einheit zugeordnet werden kann und/oder ob eine Bestimmung unter Verwendung der Datentransformation eines zweiten Eingangsdatensatzes ausgeführt wird, dem kein Angriff auf die KI-Einheit zugeordnet werden kann.

In einer Ausführungsform kann das Verfahren ein Empfangen einer, insbesondere benutzerdefinierten, Verteilungsangabe umfassen, die eine explizite oder eine implizite Verteilungsfunktion angibt. Dabei kann das Bestimmen der Verteilungsfunktion unter Berücksichtigung der Verteilungsangabe ausgeführt werden.

In einer Ausführungsform kann das Verfahren ein Empfangen mindestens eines, insbesondere benutzerdefinierten, Schwellwerts umfassen, wobei der mindestens eine Schwellwert angeben kann, dass bei Überschreiten des mindestens einen Schwellwerts eine Datentransformation durch das KI-Verteidigungsmodul ausgeführt wird.

In einer Ausführungsform kann das Verfahren ein Empfangen einer, insbesondere benutzerdefinierten, Rekonstruktionsangabe umfassen, wobei die Rekonstruktionsangabe angeben kann, ob eine Datentransformation die gesamten Modelldaten, eine zufällige Teilmenge der Modelldaten und/oder eine wichtigkeitsbasierte Auswahl der Modelldaten betrifft. Dabei kann das Bestimmen der Inferenzkonfiguration unter Berücksichtigung der Rekonstruktionsangabe ausgeführt werden.

In einer Ausführungsform kann eine/die Datentransformation als ein Samplingverfahren ausgebildet sein.

Die Aufgabe wird ferner insbesondere gelöst durch ein Verfahren zur Verhinderung eines Angriffs auf eine KI-Einheit, folgende Schritte aufweisend:
- Erzeugen mindestens eines KI-Verteidigungsmoduls, insbesondere nach einem Verfahren, wie es vorstehend beschrieben ist, insbesondere unter Verwendung eines Abwehrgenerators, wie er vorstehend beschrieben ist;
- Bestimmen, unter Verwendung des mindestens einen KI-Verteidigungsmoduls, ob ein Eingangsdatensatz der KI-Einheit einem Angriff auf die KI-Einheit zugeordnet werden kann; und/oder
- Bestimmen, unter Verwendung des mindestens einen KI-Verteidigungsmoduls, eines zweiten Eingangsdatensatzes, dem kein Angriff auf die KI-Einheit zugeordnet werden kann und Verwenden des zweiten Eingangsdatensatz bei einer Regression und/oder Klassifikation.

In einer Ausführungsform kann das Verfahren umfassen:
- Empfangen einer, insbesondere benutzerdefinierten, Zieldefinition;
- Bestimmen der Inferenzkonfiguration unter Berücksichtigung der Zieldefinition;
- Auswählen, unter Berücksichtigung der Zieldefinition, ob
   o eine Bestimmung, ob dem Eingangsdatensatz ein Angriff auf die KI-Einheit zugeordnet werden kann; und/oder
   o eine Bestimmung unter Verwendung der Datentransformation eines zweiten Eingangsdatensatzes, dem kein Angriff auf die KI-Einheit zugeordnet werden kann,
   ausgeführt wird.

Die Aufgabe wird ferner insbesondere gelöst durch ein computerlesbares-Speichermedium, welches Instruktionen enthält, die mindestens einen Prozessor dazu veranlassen, ein Verfahren wie es vorstehend beschrieben worden ist, zu implementieren, wenn die Instruktionen durch den mindestens einen Prozessor ausgeführt werden.

Es ergeben sich ähnliche oder identische Vorteile, wie sie bereits im Zusammenhang mit dem vorstehend beschriebenen Verfahren, dem vorstehend beschrieben Abwehrgenerator und mit dem vorstehend beschriebenen System beschrieben worden sind.

Es wird an dieser Stelle ausdrücklich darauf hingewiesen, dass sämtliche Verfahrensschritte, die im Zusammenhang mit dem System beschrieben worden sind, auch hinsichtlich des Verfahrens und des computerlesbares-Speichermediums (und umgekehrt) als erfindungswesentlich offenbart sind. Insbesondere sind Details, die hinsichtlich des Abwehrgenerators und/oder des Systems beschrieben sind, auch auf die Verfahren und das computerlesbares-Speichermedium anwendbar und umgekehrt.

Weitere Ausführungsformen ergeben sich aus den Unteransprüchen.

Im Folgenden wird die Erfindung anhand von Ausführungsbeispielen näher erläutert. Dabei zeigt:
- Figur 1:: eine Prinzipiendarstellung der Klassifikation eines Beispielbildes;
- Figur 2:: eine Prinzipiendarstellung der Überlagerungen des Beispielbildes mit einer adversarialen Störung;
- Figur 3:: eine Prinzipiendarstellung der Klassifikation des Beispielbildes mit einer adversarialen Störung;
- Figur 4:: eine schematische Darstellung des KI-Abwehrsystems;
- Figur 5:: eine schematische Darstellung eines künstlichen neuronalen Netzwerks;
- Figur 6:: eine schematische Darstellung der Unterteilung eines Eingangsbildes;
- Figur 7:: eine schematische Darstellung des Unterteilens eines Eingangsbildes in unterschiedliche Kacheln; und
- Figur 8:: eine schematische Darstellung der Bestimmung einer Wahrscheinlichkeitsverteilung für eine Vielzahl von Kacheln.

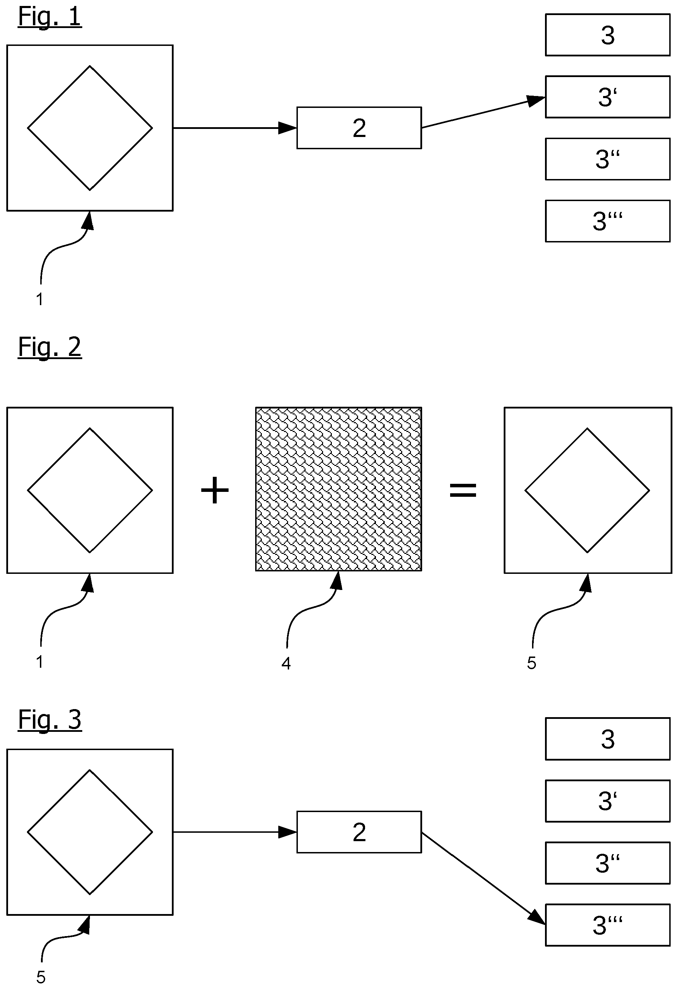

Figur 1 zeigt eine Prinzipiendarstellung der Klassifikation eines Eingangsbildes 1. Das Eingangsbild 1 zeigt in dem Ausführungsbeispiel der Figur 1 eine schematische Darstellung eines Stoppschildes. Das Eingangsbild 1 kann daher zum Beispiel durch ein Kamerasystem eines Fahrzeugs aufgenommen worden sein. Zum Beispiel beim hochautonomen Fahren.

Um das hochautonome Fahren zu ermöglichen, ist es notwendig, die einzelnen Bildbestandteile des Eingangsbildes 1 zu klassifizieren. Das bedeutet, dass jedem Pixel zugeordnet werden muss, ob der Pixel einem bestimmten Objekt angehört bzw. welchem Objekt oder ob der Pixel den Hintergrund zeigt, zum Beispiel den Himmel.

In dem gezeigten Ausführungsbeispiel sind vereinfacht vier Klassen 3, 3', 3ʺ, 3‴ für jeden Pixel des Eingangsbildes 1 möglich. Zur Klassifikation der Pixel ist eine Klassifikationseinheit 2 vorgesehen, die zum Beispiel als ein künstliches neuronales Netz ausgebildet sein kann. Es ist jedoch auch denkbar, dass die Klassifikationseinheit 2 als eine Stützvektormaschine (Support-Vector-Machine) oder als ein Bayesches Netz ausgebildet ist.

Die Klassifikationseinheit 2 wird in einer Trainingsphase für eine bestimmte Klassifikationsaufgabe trainiert. Beim Training einer Klassifikationseinheit 2 wird eine Kostenfunktion unter Verwendung von einem Trainingsdatensatz minimiert. Der Trainingsdatensatz umfasst dabei Beispielbilder und entsprechende zugehörige Klassifikationen. Der Trainingsdatensatz gibt somit die sogenannte Grundwahrheit an (Engl. "Ground Truth")

Im Normalfall kann eine Klassifikationseinheit 2 eine Bildsegmentierung bzw. Klassifikation einzelner Pixel mit entsprechender Zuverlässigkeit ausführen.

Figur 2 illustriert den Fall einer adversarialen Störung. Dabei wird ein Eingangsbild 1 mit einem Angriffsbild 4 überlagert. Das Ergebnis der Überlagerungen ist ein gestörtes Eingangsbild 5. Das gestörte Eingangsbild 5 ist für den menschlichen Betrachter nicht von dem Eingangsbild 1 zu unterscheiden.

Figur 3 illustriert das Verhalten der Klassifikationseinheit 2, wenn das gestörte Eingangsbild 5 klassifiziert werden soll. So wird die Klassifikationseinheit 2 das gestörte Eingangsbild 5 nicht wie im Fall der Figur 1 der Klasse 3′ zuordnen, sondern der Klasse 3‴. Somit kommt es zu einer falschen Klassifizierung.

Es ist somit möglich, Klassifikationseinheiten 2 gezielt zu beeinträchtigen, ohne dass ein menschlicher Benutzer den Grund hierfür in den Daten erkennen kann. Es besteht daher die Gefahr, dass beim hochautonomen Fahren Angriffe auf die in dem Fahrzeug verwendeten Klassifikationseinheiten 2 ausgeführt werden, sodass es zu einem Unfall kommen kann.

Ähnliche Probleme ergeben sich jedoch in allen Feldern der künstlichen Intelligenz, z.B. bei der Texterkennung, Audioerkennung oder Spracherkennung.

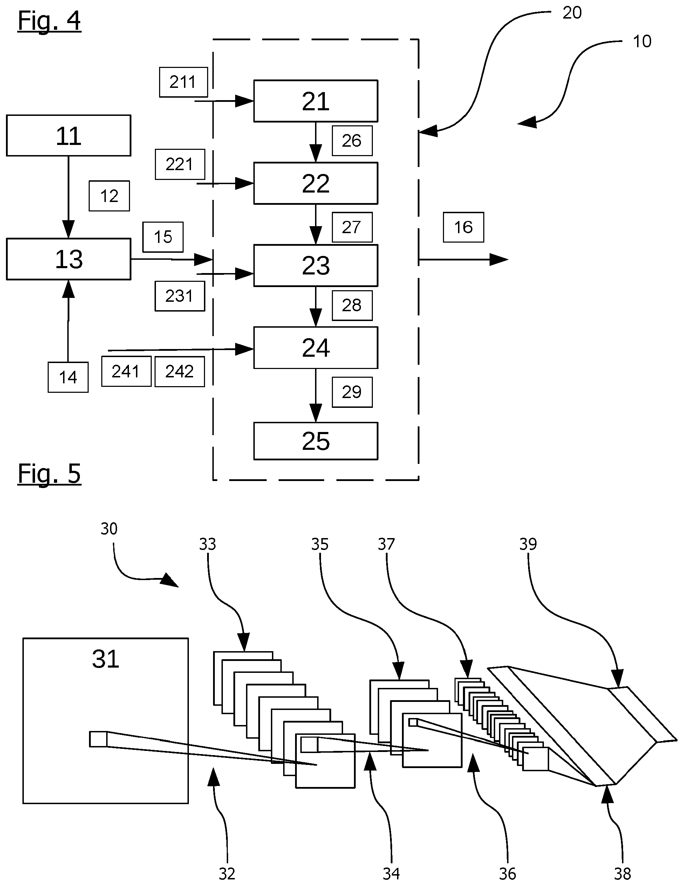

Die Figur 4 zeigt ein Abwehrsystem 10, welches eine Zieldefinitionseinheit 11, eine Eingangsdateneinheit 13 und einen Abwehrgenerator 20 aufweist.

Die Zieldefinitionseinheit 11 ist dazu ausgebildet, eine Benutzereingabe zu empfangen, beispielsweise durch eine grafische Benutzeroberfläche oder über eine Kommunikationsschnittstelle, die das zu erreichende Ziel des Abwehrsystems 20 angibt.

Durch die Benutzereingabe kann angegeben werden, dass eine Detektion von einem adversarialen Angriff ausgeführt werden soll. Das bedeutet, dass lediglich festgestellt werden soll, ob Eingangsdaten 14 adversariale Störung aufweisen.

Eine weitere Möglichkeit der Zieldefinition besteht darin, dass die adversarialen Störungen beseitigt werden sollen.

Die Zieldefinitionseinheit 11 bestimmt in dem Ausführungsbeispiel der Figur 4 unter Berücksichtigung der Benutzereingabe eine Zieldefinition 12, die angibt, ob eine Detektion oder eine Filterung bzw. Rekonstruktion ausgeführt werden soll.

Die Zieldefinition 12 wird einer Eingangsdateneinheit 13 zugeführt, die darüber hinaus einen Eingangsdatensatz 14 empfängt. Der Eingangsdatensatz 14 umfasst in dem gezeigten Ausführungsbeispiel eine Vielzahl von Bilddaten. Die Bilddaten des Eingangsdatensatzes 14 sind in einem möglichen Ausführungsbeispiel derart vorverarbeitet, dass sie eine identische Größe aufweisen. In einem anderen Ausführungsbeispiel weisen die Bilddaten des Eingangsdatensatzes 14 jeweils unterschiedliche Größen auf. In einem Ausführungsbeispiel ist die Eingangsdateneinheit 13 dazu ausgebildet, die Bilddaten wie beschrieben vorzuverarbeiten. Selbstverständlich ist der Eingangsdatensatz 14 nicht auf Bilddaten beschränkt und kann jede mögliche Form von Daten umfassen.

Allgemein und nicht bezogen auf ein bestimmtes Ausführungsbeispiel kann der Eingangsdatensatz 14 Daten umfassen, die keine adversarialen Störung aufweisen.

In einem Ausführungsbeispiel umfasst der Eingangsdatensatz 14 eine Vielzahl von Merkmalsdetektoren 33, 35, 37 eines künstlichen neuronalen Netzes 30 (vgl. Fig. 5). Ein Merkmalsdetektor 33, 35, 37 kann dabei als eine Matrix ausgebildet sein, der eine Aktivierungsfunktion zugeordnet ist. In der Matrix können die Gewichte der Aktivierungsfunktion gespeichert sein. Mögliche Aktivierungsfunktionen sind z.B. sigmoid, relu (Rectified Linear Unit) oder tanh (Hyperbolic Tangent).

Der Eingangsdatensatz 14 kann ebenfalls durch einen Benutzer über eine grafische Benutzeroberfläche ausgewählt sein. Es ist ebenso denkbar, dass der Eingangsdatensatz 14 über eine Kommunikationsschnittstelle, zum Beispiel über das Internet über eine API, empfangen wird.

Darüber hinaus kann der Eingangsdatensatz 14 Bereichsbeschränkungen aufweisen. Bereichsbeschränkungen geben an, dass nur Teile des restlichen Eingangsdatensatzes 14 betrachtet werden sollen. Zum Beispiel kann der Eingangsdatensatz 14 angeben, dass nur ein unterer Teil eines Bildes betrachtet werden soll. Dies ist insbesondere dann sinnvoll, wenn wichtige Merkmale nur in bestimmten Bildbereichen zu erwarten sind. Der Benutzer hat somit die Möglichkeit, Vorwissen über den Eingangsdatensatz 14 in dem Eingangsdatensatz 14 selbst zu speichern.

Die Eingangsdateneinheit 13 bestimmt unter Verwendung der Zieldefinition 12 und des Eingangsdatensatzes 14 Modelldaten 15. Die Modelldaten 15 werden von dem Abwehrgenerator 20 empfangen. Der Abwehrgenerator 20 weist eine Kacheleinheit 21, eine Aggregationseinheit 22, eine Verteilungseinheit 23, eine Inferenzeinheit 24 und eine Datentransformationseinheit 25 auf.

Die Kacheleinheit 21 ist dazu ausgebildet, die Modelldaten 15 in mindestens eine Kachel 26 zu unterteilen und so eine Kachelmenge 53 zu bestimmen. Wie bereits ausgeführt, können durch das Aufteilen der Modelldaten 15 in einzelne Kacheln 26, 53 lokale Abhängigkeiten ausgenutzt werden. Zum Erstellen der mindestens einen Kachel 26 bzw. der Kachelmenge 53 können die Modelldaten 15 gescannt werden. Zum Beispiel kann der Eingangsdatensatz 14 und/oder die Modelldaten 15 als ein mehrdimensionaler Tensor gespeichert sein.

Die Kacheleinheit 21 kann dazu ausgebildet sein, die Modelldaten 15 zu scannen. Das bedeutet, dass die Modelldaten 15 sequenziell in Kacheln 26 unterteilt werden. Dazu kann die Kacheleinheit 21 dazu ausgebildet sein, eine Kachelangabe 211 zu empfangen. Die Kachelangabe 211 kann eine Kerneldefinition angeben, die die Größe der Kacheln 26 angibt. Zusätzlich zu der Kerneldefinition kann die Kachelangabe einen Stride und einen Versatz angeben. Der Stride gibt an, wie viele Datenelemente, zum Beispiel Pixel, der Modelldaten 15 zwischen den einzelnen Scanschritten überschritten werden. Der Versatz sorgt dafür, wie eingehend bereits beschrieben, dass die Größe der Kacheln und die Schrittweite nicht dazu führen, dass beim Scannen der Kernel über das Ende der Daten hinausragen kann.

Die mindestens eine Kachel 26 wird anschließend durch die Aggregationseinheit 22 empfangen. Die Aggregationseinheit 22 ist grundsätzlich dazu ausgebildet, aggregierte Daten 27 zu bestimmen, die mindestens eine Kachel 26 auf einen endlichdimensionalen Vektorraum mit reellen Zahlen abbilden.

Die Aggregationseinheit 22 ist dazu ausgebildet, eine Aggregationsangabe 221 zu empfangen, die angibt, wie die mindestens eine Kachel 26 verarbeitet werden soll, um die aggregierten Daten 27 zu bestimmen. Dabei kann die Aggregationseinheit 22 zur Bestimmung der aggregierten Daten 27 unterschiedliche Operationen ausführen. In dem gezeigten Ausführungsbeispiel gibt die Aggregationsangabe 221 an, dass die Identität der mindestens einen Kachel 26 verwendet werden soll, um die aggregierten Daten 27 zu bestimmen. Das bedeutet, dass die Werte der Modelldaten 15 selbst als aggregierte Daten 27 verwendet werden.

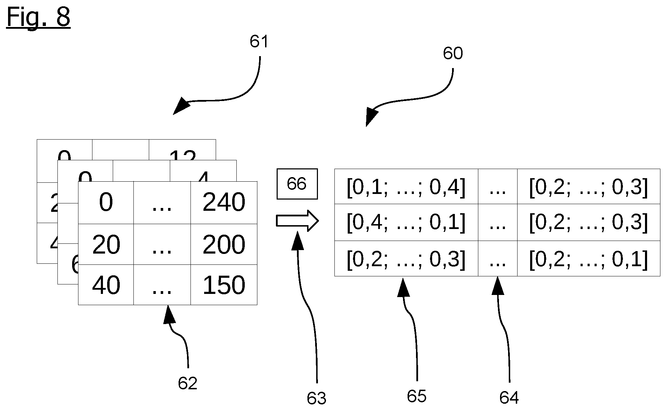

Die Aggregationseinheit 22 gibt die aggregierten Daten 27 an die Verteilungseinheit 23 ab. Die Verteilungseinheit 23 ist dazu ausgebildet, aus den aggregierten Daten 27 eine Verteilungsfunktion 28 (vgl. auch Figur 8) zu bestimmen. Die Verteilungsfunktion 28 gibt die Verteilung unterschiedlicher Merkmale des Eingangsdatensatzes 14 bzw. der Modelldaten 15 an. Die Verteilungseinheit 23 ist dazu ausgebildet, eine Verteilungsangabe 231 zu empfangen. Die Verteilungsangabe 231 gibt an, ob die Verteilungsfunktion 28 implizit oder explizit bestimmt werden soll.

Explizit bedeutet, dass eine bestimmte Verteilungsfunktion existiert, die zum Berechnen der Verteilungsfunktion 28 herangezogen werden kann. Implizit bedeutet, dass die Verteilungsfunktion 28 nur indirekt bestimmt werden kann, zum Beispiel über eine L² Distanz zwischen Eingangsdaten und den Modelldaten 15.

Anschließend empfängt die Inferenzeinheit 24 die Verteilungsfunktion 28 und ist dazu ausgebildet, eine Inferenzkonfiguration 29 zu bestimmen. Zusätzlich empfängt die Inferenzeinheit mindestens einen Schwellwert 241 und eine Rekonstruktionsangabe 242. Der mindestens eine Schwellwert 241 gibt bei einem Vergleich an, ob eine Detektion oder eine Rekonstruktion ausgeführt werden soll. Die Rekonstruktionsangabe 242 gibt an, ob eine auszuführende Datentransformation die gesamten Modelldaten 15, eine zufällige Teilmenge der Modelldaten 15 und/oder eine wichtigkeitsbasierte Auswahl der Modelldaten 15 betrifft.

Die Inferenzeinheit 24 ist dazu ausgebildet, eine Inferenzkonfiguration 29 zu bestimmen, d. h. wie ein KI-Verteidigungsmodul 16 arbeitet bzw. ausgestaltet ist, um entweder zu bestimmen, ob in den Modelldaten 15 bzw. in dem Eingangsdatensatz 14 adversariale Störungen vorliegen oder zur Bestimmung eines zweiten Eingangsdatensatzes 14, der keine adversarialen Störungen umfasst.

Die Inferenzkonfiguration 29 wird durch die Datentransformationseinheit 25 empfangen, die unter Verwendung der Inferenzkonfiguration 29 mindestens ein KI-Verteidigungsmodul 16 erzeugt. Das mindestens eine KI-Verteidigungsmodul 16 kann anschließend verwendet werden, um adversariale Störungen in Eingangsdaten zu detektieren oder einen zweiten Eingangsdatensatz ohne adversariale Störungen zu bestimmen.

Das mindestens eine KI-Verteidigungsmodul 16 kann somit zum Beispiel als Add-On für eine KI-Einheit 30 verwendet werden, sodass vor jeder Klassifikation oder Regression überprüft wird, ob eine adversariale Störung in den Eingangsdaten der KI-Einheit vorliegt.

Die KI-Verteidigungseinheit 16 verarbeitet Eingangsdaten einer KI-Einheit entsprechend der Ergebnisse des Abwehrgenerators 20. Das bedeutet, die KI-Einheit 16 ist dazu ausgebildet, Eingangsdaten entsprechend der Kachelangabe 211 in mindestens eine Kachel zu unterteilen. Ferner ist die KI-Verteidigungseinheit 16 dazu ausgebildet, für die mindestens eine Kachel aggregierte Daten entsprechend der Aggregationsangabe 221 zu bestimmen und anschließend unter Verwendung der aggregierten Daten und der Verteilungsangabe 231 eine Verteilungsfunktion zu bestimmen.

Die KI-Verteidigungseinheit 16 prüft z. B., inwieweit die Verteilungsfunktion der Eingangsdaten von der durch die Verteilungseinheit 23 bestimmte Verteilungsfunktion 28 abweicht. Die KI-Verteidigungseinheit 16 ist ferner dazu ausgebildet, die bestimmte Abweichung mit dem Schwellwert 241 zu vergleichen. Basierend auf dem Vergleich kann festgestellt werden, ob der Eingangsdatensatz der KI-Einheit 30 eine adversariale Störung aufweist.

Natürlich ist es mit dem Abwehrgenerator 20 möglich, eine Vielzahl von KI-Verteidigungsmodulen 16 mit unterschiedlichen Konfigurationen zu erzeugen, sodass eine große Anzahl von adversarialen Störungen detektiert bzw. beseitigt werden können. Dabei können mehrere KI-Verteidigungsmodule Eingangsdaten einer KI-Einheit 30 parallel verarbeiten, sodass eine effiziente Ausführung ermöglicht wird.

Ferner ist die KI-Verteidigungseinheit 16 dazu ausgebildet, für Eingangsdaten unter Verwendung der Verteilungsfunktion 28 und einer Datentransformation einen zweiten Eingangsdatensatz zu bestimmen, die den Eingangsdaten ohne adversariale Störungen entsprechend. Hier können z.B. Sampling-basierte Rekonstruktionsverfahren eingesetzt werden.

Figur 5 beschreibt den Aufbau eines künstlichen neuronalen Netzwerks 30, welches als ein Convolutional Neural Network (CNN) ausgebildet ist und eine mögliche KI-Einheit 30 darstellt. In einer Eingabeschicht 31 werden die zu verarbeitenden Daten eingelesen. Zum Beispiel die RGB-Werte eines Pixels eines Bildes. Bei einer ersten Faltung 32 wird durch ein Scannen eines Kernels über die Eingangsdatenschicht 31 eine erste Faltung 32 zum Erstellen erster Merkmalsdetektoren 33 ausgeführt. Die Merkmalsdetektoren 33 können jeweils dazu ausgebildet sein, bestimmte Datenmuster zu erkennen, z.B. Kanten oder Ecken in einem Bild.

Es ist möglich, die Merkmalsdetektoren, bzw. die Gewichte und Neuronen eines Merkmalsdetektors 33 als Modelldaten 15 für das Abwehrsystem 10 bzw. des Abwehrgenerators 20 zu verwenden.

Bei einer zweiten Faltung 34 wird durch sogenanntes Pooling bzw. Subsampling eine Reduktion der Merkmalsdetektoren durchgeführt, sodass zweite Merkmalsdetektoren 35 erzeugt werden. In einem weiteren Schritt werden bei einer weiteren Faltung 36 dritte Merkmalsdetektoren 37 erzeugt. Die letzte Schicht 38 des CNN ist vollständig verbunden (fully connected layer). Bei der Ausgabeschicht 39 bzw. Soft-Max-Schicht, wird jedem Wert eine Wahrscheinlichkeit der Zugehörigkeit in eine Klasse zugewiesen.

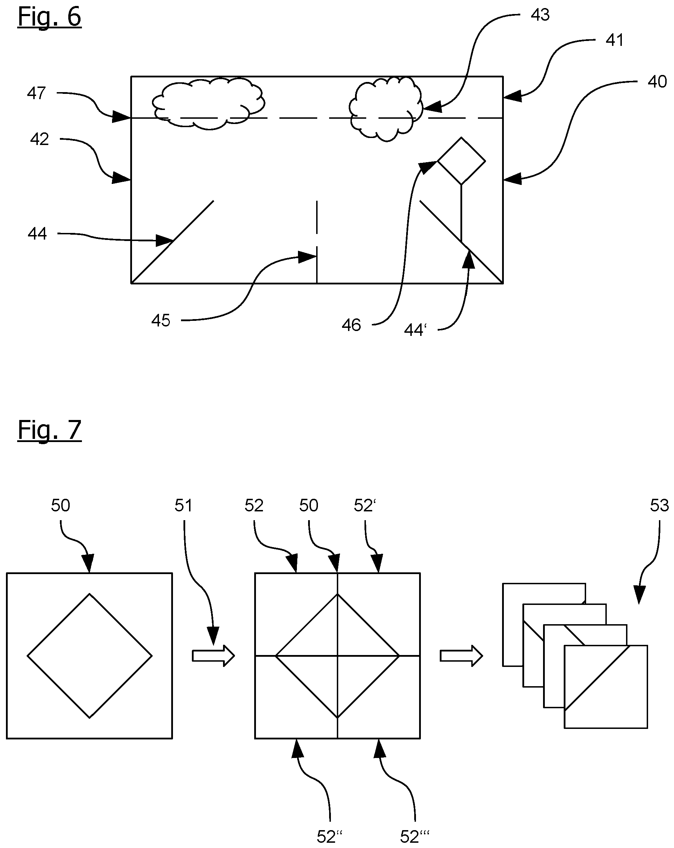

Figur 6 zeigt eine weitere Möglichkeit, die Funktionsweise des Abwehrsystems 20 zu verbessern. Figur 6 zeigt ein Eingangsbild 40, welches Teil der Eingangsdaten 14 sein kann. Das Eingangsbild 40 zeigt ein Stoppschild 46, Fahrbahnmarkierungen 44, 44′, eine Mittellinie 45 und Wolken 43. Bei Anwendungen des autonomen Fahrens kann nun mehr ausgenutzt werden, dass für die Aufgabe des autonomen Fahrens relevanten Informationen nur in bestimmten Bildbereichen zu finden sind.

So sind bei dem Ausführungsbeispiel der Figur 40 sämtliche relevanten Informationen in einem unteren Bildausschnitt 42 angeordnet. Oberhalb einer Trennlinie 47, d. h. in dem oberen Bildausschnitt 41 sind keine für das Fahren eines Fahrzeugs relevanten Informationen zu finden.

Diese Aufteilung kann derart ausgenutzt werden, dass in der Eingangsdateneinheit 13 die Eingangsdaten 14 derart vorverarbeiten werden, dass nicht relevante Bildausschnitte gelöscht werden, d. h. der obere Bildausschnitt.

Figur 7 illustriert noch einmal exemplarisch das Zerteilen eines Eingangsbildes 50 bzw. der Modelldaten 15 in eine Vielzahl von Kacheln 52, 52', 52", 52‴.

In der Figur 7 wird gezeigt, dass ein Eingangsbild 50 bzw. die Modelldaten 15 unter Verwendung einer Kachelangabe 51 in vier Kacheln 52, 52', 52", 52‴ zerteilt wird. Beim Scannen des Eingangsbildes 50 wird von links oben reihenweise nach unten rechts gescannt. Das bedeutet: zunächst wird die Kachel 52 erstellt. Anschließend wird die Kachel 52', dann die Kachel 52" und zuletzt die Kachel 52‴ erstellt. Somit kann die mindestens eine Kachel 26 bzw. die Kachelmenge 53 auf effiziente Art und Weise erstellt werden.

Figur 8 illustriert das Bestimmen 60 der Verteilungsfunktion 28, 65. Figur 8 zeigt eine Kachelmenge 61, wobei in jedem Datenfeld einer Kachel der Kachelmenge 61 ein Helligkeitswert 62 gespeichert ist, der eine Ganzzahl im Bereich von 0 bis 255 ist. Unter Verwendung der Kachelmenge 61 und einer Verteilungsangabe 66 kann nun eine Verteilungsfunktion 63 bestimmt werden, um eine Verteilung 65 zu bestimmen.

In dem gezeigten Ausführungsbeispiel wird unter Verwendung der Kachelmenge 61 die Übergangswahrscheinlichkeit bestimmt, dass ein Wert im Datenfeld rechts von dem aktuellen Datenfeld einen bestimmten Helligkeitswert annimmt. Dieser Wert wird auch Overall Probability Value genannt. Das bedeutet, dass in jedem Datenfeld der Verteilung 65 256 Werte gespeichert sind. Die Verteilung 65 gibt somit eine Wahrscheinlichkeitsverteilung an.

Unter Verwendung der Verteilung 65 kann nun für Eingangsdaten 5 bestimmt werden, ob dieser eine adversariale Störung enthält. Dabei kann geprüft werden, ob die Übergangswahrscheinlichkeiten der Verteilung 65 die Eingangsdaten 5 erklären. Dabei kann ein Schwellwert festgelegt werden, der eine minimale Wahrscheinlichkeit angeben kann, dass die Werte der Eingangsdaten durch die Kachelmenge 61 erklärt werden. Liegt die Wahrscheinlichkeit über dem Schwellwert, so liegt keine adversariale Störung vor. Liegt die Wahrscheinlichkeit unterhalb des Schwellwerts, so liegt eine adversariale Störung vor.

Es wird darauf hingewiesen, dass alle oben beschriebenen Teile für sich alleine gesehen und in jeder Kombination, insbesondere den in den Zeichnungen dargestellten Details als erfindungswesentlich, nicht jedoch unverzichtbar, beansprucht werden.

### Bezugszeichenliste

- 1: Eingangsbild
- 2: Klassifikationseinheit
- 3, 3', 3ʺ, 3‴: Bildklasse
- 4: Angriffsbild
- 5: Testdatensatz/gestörtes Eingangsbild
- 10: Abwehrsystem
- 11: Zieldefinitionseinheit
- 12: Zieldefinition
- 13: Eingangsdateneinheit
- 14: Eingangsdatensatz
- 15: Modelldaten
- 16: KI-Verteidigungsmodul
- 20: Abwehrgenerator
- 21: Kacheleinheit
- 22: Aggregationseinheit
- 221: Aggregationsangabe
- 23: Verteilungseinheit
- 231: Verteilungsangabe
- 24: Inferenzeinheit
- 241: Schwellwert
- 242: Rekonstruktionsangabe
- 25: Datentransformationseinheit
- 26, 53, 61: Kachel/Kachelmenge
- 27: aggregierte Daten
- 28: Verteilungsfunktion
- 29: Inferenzkonfiguration
- 30: KI-Einheit/Convolutional Neural Network (CNN)
- 31: Eingangsschicht
- 32: erste Faltung
- 33: erste Merkmalsdetektoren
- 34: zweite Faltung
- 35: zweite Merkmalsdetektoren
- 36: dritte Faltung
- 37: dritte Merkmalsdetektoren
- 38: Soft-Max-Schicht
- 39: Ausgabeschicht
- 40: Eingangsbild
- 41: Oberer/Erster Bildausschnitt
- 42: Unterer/Zweiter Bildausschnitt
- 43: Wolke
- 44, 44′: Fahrbahnmarkierung
- 45: Mittellinie
- 46: Straßenschild
- 47: Trennlinie
- 50: Eingangsbild
- 51, 211: Kachelangabe
- 52, 52', 52", 52‴′: Bildkachel
- 60: Verteilungsberechnung
- 62: Helligkeitswert
- 63: Verteilungsfunktion
- 64: Übergangsmatrix
- 65: Wahrscheinlichkeitsverteilung
- 66: Verteilungsauswahl

## Patentansprüche

1. Abwehrgenerator (20) zur dynamischen Generierung von mindestens einem KI-Verteidigungsmodul (16), das Folgende aufweisend:
- eine Kacheleinheit (21), die dazu ausgebildet ist, für Modelldaten (15) mindestens eine Kachel (26, 53, 61) zu bestimmen, wobei die Modelldaten (15) einer KI-Einheit (30) zugeordnet sind und die mindestens eine Kachel (26, 53, 61) zumindest eine Teilmenge der Modelldaten (15) angibt;
- eine Aggregationseinheit (22), die dazu ausgebildet ist, aggregierte Daten (27) zu bestimmen, wobei die aggregierten Daten (27) der mindestens einen Kachel (26, 53, 61) mindestens eine, insbesondere mathematische, Kennzahl zuordnen;
- eine Verteilungseinheit (23), die dazu ausgebildet ist, eine Verteilungsfunktion (28, 65) für die aggregierten Daten (27) zu bestimmen;
- eine Inferenzeinheit (24), die dazu ausgebildet ist, unter Verwendung der Verteilungsfunktion (28, 65) mindestens eine Inferenzkonfiguration (29) zu bestimmen;
- eine Datentransformationseinheit (25), die dazu ausgebildet ist, unter Verwendung der mindestens einen Inferenzkonfiguration (29) mindestens ein KI-Verteidigungsmodul (16) für die KI-Einheit (30) zu erzeugen, wobei das mindestens eine KI-Verteidigungsmodul (16) dazu ausgebildet ist, für einen Eingangsdatensatz (5, 14) der KI-Einheit (30):
o zu bestimmen, ob dem Eingangsdatensatz (5, 14) ein Angriff auf die KI-Einheit (30) zugeordnet werden kann; und
o unter Verwendung einer Datentransformation einen zweiten Eingangsdatensatz (14) zu bestimmen, dem kein Angriff auf die KI-Einheit (30) zugeordnet werden kann,
wobei die Inferenzeinheit (24) dazu ausgebildet ist, eine Rekonstruktionsangabe (242) zu empfangen,
wobei die Rekonstruktionsangabe (242) angibt, ob die Datentransformation die gesamten Modelldaten (15), eine zufällige Teilmenge der Modelldaten (15) und/oder eine wichtigkeitsbasierte Auswahl der Modelldaten (15) betrifft,
wobei die Inferenzeinheit (24) dazu ausgebildet ist, die Inferenzkonfiguration (29) unter Berücksichtigung der Rekonstruktionsangabe (242) zu bestimmen.

2. Abwehrgenerator (20) nach Anspruch 1,
**dadurch gekennzeichnet, dass**
die Kacheleinheit (21) dazu ausgebildet ist, eine Kachelangabe (51, 211) zu empfangen, wobei die Kachelangabe (51, 211) insbesondere benutzerdefinierbar ist, wobei die Kachelangabe (51, 211) bevorzugt eine Kernelgröße, einen Stride und/oder einen Versatz angibt und wobei die Kacheleinheit (21) dazu ausgebildet ist, die mindestens eine Kachel (26, 53, 61) unter Verwendung der Kachelangabe (51, 211) zu bestimmen.

3. Abwehrgenerator (20) nach einem der vorhergehenden Ansprüche,
**dadurch gekennzeichnet, dass**
die Aggregationseinheit (22) dazu ausgebildet ist, eine, insbesondere benutzerdefinierbare, Aggregationsangabe (221) zu empfangen, wobei die Aggregationsangabe (221) und/oder die mindestens eine Kennzahl jeweils eine Singulärwertzerlegung, eine Faltung, einen Mittelwert, einen Median und/oder eine Varianz für die mindestens eine Kachel (26, 53, 61) angibt und wobei die Aggregationseinheit (22) dazu ausgebildet ist, die aggregierten Daten (26) unter Berücksichtigung der Aggregationsangabe (221) zu bestimmen.

4. Abwehrgenerator (20) nach einem der vorhergehenden Ansprüche, insbesondere nach Anspruch 2,
**dadurch gekennzeichnet, dass**
die Aggregationseinheit (22) dazu ausgebildet ist, eine/die Kachelangabe (211, 51) von der Kacheleinheit (21) zu empfangen, wobei die Aggregationseinheit (22) zum Bestimmen der aggregierten Daten (27) dazu ausgebildet ist, die Kachelangabe (51, 221) von der mindestens einen Kachel (26, 53, 61) zu subtrahieren.

5. Abwehrgenerator (20) nach einem der vorhergehenden Ansprüche,
**dadurch gekennzeichnet, dass**
- der Abwehrgenerator (20) dazu ausgebildet ist, eine, insbesondere benutzerdefinierbare, Zieldefinition (12) zu empfangen, wobei die Inferenzeinheit (24) dazu ausgebildet ist, die Inferenzkonfiguration (29) unter Berücksichtigung der Zieldefinition (12) zu bestimmen, wobei
- die Datentransformationseinheit (25) dazu ausgebildet ist, unter Berücksichtigung der Inferenzkonfiguration (29) auszuwählen, ob
o eine Bestimmung, ob dem Eingangsdatensatz (5, 14) ein Angriff auf die KI-Einheit (30) zugeordnet werden kann, und/oder
o eine Bestimmung, unter Verwendung der Datentransformation, eines zweiten Eingangsdatensatzes (14), dem kein Angriff auf die KI-Einheit (30) zugeordnet werden kann,
ausgeführt wird.

6. Abwehrgenerator (20) nach einem der vorhergehenden Ansprüche,
**dadurch gekennzeichnet, dass**
die Verteilungseinheit (23) dazu ausgebildet ist, eine, insbesondere benutzerdefinierbare, Verteilungsangabe (231) zu empfangen, wobei die Verteilungseinheit (23) ferner dazu ausgebildet ist, unter Berücksichtigung der Verteilungsangabe (231) die Verteilungsfunktion (65) zu bestimmen, wobei die Verteilungsangabe (231) eine explizite oder implizite Verteilungsfunktion (28) angibt.

7. Abwehrgenerator (20) nach einem der vorhergehenden Ansprüche,
**dadurch gekennzeichnet, dass**
die Inferenzeinheit (24) dazu ausgebildet ist, mindestens einen, insbesondere benutzerdefinierbaren, Schwellwert (241) zu empfangen und die Bestimmung der Inferenzkonfiguration unter Berücksichtigung des mindestens einen Schwellwerts (241) auszuführen, wobei der mindestens eine Schwellwert (241) angibt, dass bei Überschreiten des mindestens einen Schwellwerts (241) eine Datentransformation durch das KI-Verteidigungsmodul (16) ausgeführt wird.

8. Abwehrgenerator (20) nach einem der vorhergehenden Ansprüche,
**dadurch gekennzeichnet, dass**
die Datentransformation als ein Samplingverfahren ausgebildet ist.

9. Abwehrsystem (10) gegen einen adversarialen Angriff auf eine KI-Einheit (30), Folgendes aufweisend:
- eine Eingabeeinheit (13), die dazu ausgebildet ist, Eingangsdaten (5, 14) und/oder ein Eingangsmodell (30) als Modelldaten (15) zu empfangen;
- einen Abwehrgenerator (20) nach einem der Ansprüche 1 bis 8, der dazu ausgebildet ist, die Modelldaten (15) zu empfangen und mindestens ein KI-Verteidigungsmodul (16) zu erzeugen;
- eine KI-Einheit (30), die dazu ausgebildet ist, das mindestens eine KI-Verteidigungsmodul (16) vor Ausführung einer Regression und/oder Klassifikation zu verwenden, um
o zu bestimmen, ob einem Eingangsdatensatz (5, 14) der KI-Einheit (30) ein Angriff auf die KI-Einheit (30) zugeordnet werden kann; und/oder
o unter Verwendung einer Datentransformation einen zweiten Eingangsdatensatz (14) zu bestimmen, dem kein Angriff auf die KI-Einheit (30) zugeordnet werden kann und den zweiten Eingangsdatensatz (14) bei der Regression und/oder Klassifikation zu verwenden.

10. Verfahren zur dynamischen Generierung von KI-Verteidigungsmodulen (16), folgende Schritte aufweisend:
- Bestimmen von mindestens einer Kachel (26, 53, 61) für Modelldaten (15), wobei die Modelldaten (15) einer KI-Einheit (30) zugeordnet sind und die mindestens eine Kachel (26, 53, 61) zumindest eine Teilmenge der Modelldaten (15) angibt;
- Bestimmen von aggregierten Daten (27), wobei den aggregierten Daten (27) der mindestens einen Kachel (26, 53, 61), insbesondere mathematische, Kennzahlen zugeordnet werden;
- Bestimmen einer Verteilungsfunktion (28, 65) für die aggregierten Daten (27);
- Empfangen einer, insbesondere benutzerdefinierten, Rekonstruktionsangabe (242), wobei die Rekonstruktionsangabe angibt, ob eine Datentransformation die gesamten Modelldaten (15), eine zufällige Teilmenge der Modelldaten (15) und/oder eine wichtigkeitsbasierte Auswahl der Modelldaten (15) betrifft;
- Bestimmen mindestens einer Inferenzkonfiguration (29) unter Verwendung der Verteilungsfunktion (28, 65) und unter Berücksichtigung der Rekonstruktionsangabe (242);
- Erzeugen mindestens eines KI-Verteidigungsmoduls (16) für die KI-Einheit (30) unter Verwendung der mindestens einen Inferenzkonfiguration (29), wobei das mindestens eine KI-Verteidigungsmodul (16) insbesondere dazu ausgebildet ist, für einen Eingangsdatensatz (5, 14) der KI-Einheit (30):
∘ zu bestimmen, ob dem Eingangsdatensatz (5, 14) ein Angriff auf die KI-Einheit (30) zugeordnet werden kann; und
∘ unter Verwendung der Datentransformation einen zweiten Eingangsdatensatz (14) zu bestimmen, dem kein Angriff auf die KI-Einheit (30) zugeordnet werden kann.

11. Verfahren zur Verhinderung eines Angriffs auf eine KI-Einheit (30), folgende Schritte aufweisend:
- Erzeugen mindestens eines KI-Verteidigungsmoduls (16) nach Anspruch 10;
- Bestimmen, unter Verwendung des mindestens einen KI-Verteidigungsmoduls (16), ob ein Eingangsdatensatz (5, 14) der KI-Einheit (30) einem Angriff auf die KI-Einheit (30) zugeordnet werden kann; und/oder
- Bestimmen, unter Verwendung des mindestens einen KI-Verteidigungsmoduls (16), eines zweiten Eingangsdatensatzes (14), dem kein Angriff auf die KI-Einheit (30) zugeordnet werden kann und Verwenden des zweiten Eingangsdatensatz (14) bei einer Regression und/oder Klassifikation.

12. Verfahren nach Anspruch 11,
**gekennzeichnet durch**
- Empfangen einer, insbesondere benutzerdefinierten, Zieldefinition (12);
- Bestimmen der Inferenzkonfiguration (29) unter Berücksichtigung der Zieldefinition (12);
- Auswählen, unter Berücksichtigung der Zieldefinition (12), ob
∘ eine Bestimmung, ob dem Eingangsdatensatz (5, 14) ein Angriff auf die KI-Einheit (30) zugeordnet werden kann; und/oder
∘ eine Bestimmung unter Verwendung der Datentransformation eines zweiten Eingangsdatensatzes (14), dem kein Angriff auf die KI-Einheit (30) zugeordnet werden kann,
ausgeführt wird.

13. Computerlesbares-Speichermedium, welches Instruktionen enthält, die mindestens einen Prozessor dazu veranlassen, ein Verfahren nach einem der Ansprüche 10 bis 12 zu implementieren, wenn die Instruktionen durch den mindestens einen Prozessor ausgeführt werden.

## Claims

1. An attack-deterrent generator (20) for dynamically generating at least one AI defence module (16), having the following:
- a tiling unit (21) which is configured to determine at least one tile (26, 53, 61) for model data (15), wherein the model data (15) are associated with an AI unit (30) and the at least one tile (26, 53, 61) indicates at least one subset of the model data (15);
- an aggregation unit (22) which is configured to determine aggregated data (27), wherein the aggregated data (27) associate at least one, in particular mathematical, key figure with the at least one tile (26, 53, 61);
- a distribution unit (23) which is configured to determine a distribution function (28, 65) for the aggregated data (27);
- an inference unit (24) which is configured to determine at least one inference configuration (29) using the distribution function (28, 65);
- a data transformation unit (25) which is configured to generate at least one AI defence module (16) for the AI unit (30) using the at least one inference configuration (29), wherein the at least one AI defence module (16) is configured, for an input data set (5, 14) of the AI unit (30), to:
• determine whether an attack on the AI unit (30) can be associated with the input data set (5, 14); and
• determine, by using a data transformation, a second input data set (14) with which no attack on the AI unit (30) can be associated,
wherein the inference unit (24) is configured to receive a reconstruction indication (242),
wherein the reconstruction indication (242) indicates whether the data transformation concerns the entire model data (15), a random subset of the model data (15), and/or an importance-based selection of the model data (15), wherein the inference unit (24) is configured to determine the inference configuration (29) by taking into account the reconstruction indication (242).

2. The attack-deterrent generator (20) according to Claim 1, **characterised in that** the tiling unit (21) is configured to receive a tile indication (51, 211), wherein the tile indication (51, 211) is in particular user-definable, wherein the tile indication (51, 211) preferably indicates a kernel size, a stride and/or an offset, and wherein the tiling unit (21) is configured to determine the at least one tile (26, 53, 61) using the tile indication (51, 211).

3. The attack-deterrent generator (20) according to any one of the preceding claims, **characterised in that** the aggregation unit (22) is configured to receive an, in particular user-definable, aggregation indication (221), wherein the aggregation indication (221) and/or the at least one key figure indicate(s) in each case a singular value decomposition, a convolution, a mean value, a median and/or a variance for the at least one tile (26, 53, 61), and wherein the aggregation unit (22) is configured to determine the aggregated data (26) by taking into account the aggregation indication (221).

4. The attack-deterrent generator (20) according to any one of the preceding claims, in particular according to Claim 2, **characterised in that** the aggregation unit (22) is configured to receive a/the tile indication (211, 51) from the tiling unit (21), wherein the aggregation unit (22) for determining the aggregated data (27) is configured to subtract the tile indication (51, 221) from the at least one tile (26, 53, 61).

5. The attack-deterrent generator (20) according to any one of the preceding claims, **characterised in that**
- the attack-deterrent generator (20) is configured to receive an, in particular user-definable, target definition (12), wherein the inference unit (24) is configured to determine the inference configuration (29) by taking into account the target definition (12), wherein
- the data transformation unit (25) is configured to select, by taking into account the inference configuration (29), whether
• a determination of whether an attack on the AI unit (30) can be associated with the input data set (5, 14), and/or
• a determination, by using the data transformation, of a second input data set (14) with which no attack on the AI unit (30) can be associated,
is carried out.

6. The attack-deterrent generator (20) according to any one of the preceding claims, **characterised in that** the distribution unit (23) is configured to receive an, in particular user-definable, distribution indication (231), wherein the distribution unit (23) is further configured to determine the distribution function (65) by taking into account the distribution indication (231), wherein the distribution indication (231) indicates an explicit or implicit distribution function (28).

7. The attack-deterrent generator (20) according to any one of the preceding claims, **characterised in that** the inference unit (24) is configured to receive at least one, in particular user-definable, threshold value (241) and to execute the determination of the inference configuration by taking into account the at least one threshold value (241), wherein the at least one threshold value (241) indicates that when the at least one threshold value (241) is exceeded, a data transformation is carried out by the AI defence module (16).

8. The attack-deterrent generator (20) according to any one of the preceding claims, **characterised in that** the data transformation is configured as a sampling method.

9. An attack-deterrent generator (10) against an adversarial attack on an AI unit (30), having the following:
- an input unit (13) which is configured to receive input data (5, 14) and/or an input model (30) as model data (15);
- an attack-deterrent generator (20) according to any one of Claims 1 to 8, which is configured to receive the model data (15) and to generate at least one AI defence module (16);
- an AI unit (30) which is configured to use the at least one AI defence module (16) prior to carrying out a regression and/or classification in order to:
• determine whether an attack on the AI unit (30) can be associated with an input data set (5, 14) of the AI unit (30); and/or
• to determine, by using a data transformation, a second input data set (14) with which no attack on the AI unit (30) can be associated, and to use the second input data set (14) in the regression and/or classification.

10. A method for dynamically generating AI defence modules (16), having the following steps:
- determining at least one tile (26, 53, 61) for model data (15), wherein the model data (15) are associated with an AI unit (30), and the at least one tile (26, 53, 61) indicates at least one subset of the model data (15);
- determining aggregated data (27), wherein the aggregated data (27) of the at least one tile (26, 53, 61) are associated with, in particular mathematical, key figures;
- determining a distribution function (28, 65) for the aggregated data (27);
- receiving an, in particular user-defined, reconstruction indication (242), wherein the reconstruction indication indicates whether a data transformation concerns the entire model data (15), a random subset of the model data (15), and/or an importance-based selection of the model data (15);
- determining at least one inference configuration (29) using the distribution function (28, 65) and by taking into account the reconstruction indication (242);
- generating at least one AI defence module (16) for the AI unit (30) using the at least one inference configuration (29), wherein the at least one AI defence module (16) is in particular configured, for an input data set (5, 14) of the AI unit (30), to:
• determine whether an attack on the AI unit (30) can be associated with the input data set (5, 14); and
• determine, by using the data transformation, a second input data set (14) with which no attack on the AI unit (30) can be associated.

11. A method for preventing an attack on an AI unit (30), having the following steps:
- generating at least one AI defence module (16) according to Claim 10;
- determining, by using the at least one AI defence module (16), whether an input data set (5, 14) of the AI unit (30) can be associated with an attack on the AI unit (30); and/or
- determining, by using the at least one AI defence module (16), a second input data set (14), with which no attack on the AI unit (30) can be associated, and using the second input data set (14) in a regression and/or classification.

12. The method according to Claim 11, **characterised by**
- receiving an, in particular user-defined, target definition (12);
- determining the inference configuration (29) by taking into account the target definition (12);
- selecting, by taking into account the target definition (12), whether
• a determination of whether an attack on the AI unit (30) can be associated with the input data set (5, 14); and/or
• a determination, by using the data transformation, of a second input data set (14) with which no attack on the AI unit (30) can be associated,
is carried out.

13. A computer-readable storage medium which contains instructions which prompt at least one processor to implement a method according to any one of Claims 10 to 12 when the instructions are carried out by the at least one processor.

## Revendications

1. Générateur de défense (20) destiné à la génération dynamique d'au moins un module de défense (16) basé sur l'IA, présentant les éléments suivants :
- une unité de pavage (21), conçue pour déterminer au moins un pavé (26, 53, 61) pour des données modèles (15), les données modèles (15) étant attribuées à une unité (30) basée sur l'IA et ledit au moins un pavé (26, 53, 61) indiquant au moins une quantité partielle des données modèles (15) ;
- une unité d'agrégation (22), qui est conçue pour déterminer des données agrégées (27, les données agrégées (27) attribuant au moins un indicateur, en particulier mathématique, audit au moins un pavé (26, 53, 61) ;
- une unité de distribution (23), qui est conçue pour déterminer une fonction de distribution (28, 65) pour les données agrégées (27) ;
- une unité d'inférence (24), qui est conçue pour déterminer, à l'aide de la fonction de distribution (28, 65), au moins une configuration d'inférence (29) ;
- une unité de transformation de données (25), qui est conçue pour générer, à l'aide de ladite au moins une configuration d'inférence (29), au moins un module de défense (16) basé sur l'IA pour l'unité (30) basée sur l'IA, ledit au moins un module de défense (16) basé sur l'IA étant conçu, pour un jeu de données d'entrée (5, 14) de l'unité (30) basée sur l'IA :
• pour déterminer si une attaque de l'unité (30) basée sur l'IA peut être attribuée au jeu de données d'entrée (5, 14) ; et
• pour déterminer, à l'aide d'une transformation de données, un deuxième jeu de données d'entrée (14) auquel aucune attaque de l'unité (30) basée sur l'IA ne peut être attribuée,
l'unité d'inférence (24) étant conçue pour recevoir une indication de reconstruction (242),
l'indication de reconstruction (242) indiquant si la transformation de données concerne l'ensemble des données modèles (15), un sous-ensemble aléatoire des données modèles (15) et/ou une sélection basée sur l'importance des données modèles (15), l'unité d'inférence (24) étant conçue pour déterminer la configuration d'inférence (29) compte tenu de l'indication de reconstruction (242).

2. Générateur de défense (20) selon la revendication 1, **caractérisé en ce que** l'unité de pavage (21) est conçue pour recevoir une indication de pavé (51, 211), l'indication de pavé (51, 211) étant en particulier personnalisable, l'indication de pavé (51, 211) indiquant de préférence une dimension de noyau, un stride et/ou un décalage et l'unité de pavage (21) étant conçue pour déterminer ledit au moins un pavé (26, 53, 61) à l'aide de l'indication de pavé (51, 211).

3. Générateur de défense (20) selon l'une des revendications précédentes, **caractérisé en ce que** l'unité d'agrégation (22) est conçue pour recevoir une indication d'agrégation (221), en particulier personnalisable, l'indication d'agrégation (221) et/ou ledit au moins un indicateur indiquant à chaque fois une décomposition en valeurs singulières, une convolution, une valeur moyenne, une médiane et/ou une variance pour ledit au moins un pavé (26, 53, 61) et l'unité d'agrégation (22) étant conçue pour déterminer les données agrégées (26) compte tenu de l'indication d'agrégation (221).

4. Générateur de défense (20) selon l'une des revendications précédentes, en particulier selon la revendication 2, **caractérisé en ce que** l'unité d'agrégation (22) est conçue pour recevoir une indication/l'indication de pavé (221, 51) depuis l'unité de pavage (21), l'unité d'agrégation (22) pour la détermination des données agrégées (27) étant conçue pour soustraire l'indication de pavé (51, 221) dudit au moins un pavé (26, 53, 61).

5. Générateur de défense (20) selon l'une des revendications précédentes, **caractérisé en ce que**
- le générateur de défense (20) est conçu pour recevoir une définition cible (12), en particulier personnalisable, l'unité d'inférence (24) étant conçue pour déterminer la configuration d'inférence (29) compte tenu de la définition cible (12),
- l'unité de transformation de données (25) étant conçue pour choisir, compte tenu de la configuration d'inférence (29), si
• une détermination du fait qu'une attaque de l'unité (30) basée sur l'IA peut être attribuée au jeu de données d'entrée (5, 14) et/ou
• une détermination, à l'aide d'une transformation de données, du fait qu'un deuxième jeu de données d'entrée (14) auquel aucune attaque de l'unité (30) basée sur l'IA ne peut être attribuée,
est/sont exécutées.

6. Générateur de défense (20) selon l'une des revendications précédentes, **caractérisé en ce que** l'unité de distribution (23) est conçue pour recevoir une indication de distribution (231), en particulier personnalisable, l'unité de distribution (23) étant en outre conçue pour déterminer, compte tenu de l'indication de distribution (231), la fonction de distribution (65), l'indication de distribution (231) indiquant une fonction de distribution (28) explicite ou implicite.

7. Générateur de défense (20) selon l'une des revendications précédentes, **caractérisé en ce que** l'unité d'inférence (24) est conçue pour recevoir au moins une valeur seuil (241), en particulier personnalisable, et exécuter la détermination de la configuration d'inférence compte tenu de ladite au moins une valeur seuil (241), ladite au moins une valeur seuil (241) indiquant qu'une transformation de données est exécutée par le module de défense (16) basé sur l'IA lors du dépassement de ladite au moins une valeur seuil (241).

8. Générateur de défense (20) selon l'une des revendications précédentes, **caractérisé en ce que** la transformation de données est conçue comme un procédé d'échantillonnage.

9. Système de défense (10) contre une attaque hostile d'une unité (30) basée sur l'IA, présentant les éléments suivants :
- une unité de saisie (13), qui est conçue pour recevoir des données d'entrée (5, 14) et/ou un modèle d'entrée (30) en tant que données modèles (15) ;
- un générateur de défense (20) selon l'une des revendications 1 à 8, qui est conçu pour recevoir les données modèles (15) et générer au moins un module de défense (16) basé sur l'IA ;
- une unité (30) basée sur l'IA, qui est conçue pour utiliser ledit au moins un module de défense (16) basé sur l'IA avant l'exécution d'une régression et/ou d'une classification, afin
• de déterminer si une attaque de l'unité (30) basée sur l'IA peut être attribuée à un jeu de données d'entrée (5, 14) de l'unité (30) basée sur l'IA ; et/ou
• de déterminer, à l'aide d'une transformation de données, un deuxième jeu de données d'entrée (14), auquel aucune attaque de l'unité (30) basée sur l'IA ne peut être attribuée et d'utiliser le deuxième jeu de données d'entrée (14) lors de la régression et/ou la classification.

10. Procédé de génération dynamique de modules de défense (16) basés sur l'IA, présentant les étapes suivantes :
- détermination d'au moins un pavé (26, 53, 61) pour des données modèles (15), les données modèles (15) étant attribuées à une unité (30) basée sur l'IA et ledit au moins un pavé (26, 53, 61) indiquant au moins un sous-ensemble des données modèles (15) ;
- détermination de données agrégées (27), les données agrégées (27) dudit au moins un pavé (26, 53, 61) étant attribuées à des indicateurs, en particulier mathématiques ;
- détermination d'une fonction de distribution (28, 65) pour les données agrégées (27) ;
- réception d'une indication de reconstruction (242), en particulier personnalisée, l'indication de reconstruction indiquant si une transformation de données concerne l'ensemble des données modèles (15), un sous-ensemble aléatoire des données modèles (15) et/ou une sélection basée sur l'importance des données modèles (15) ;
- détermination d'au moins une configuration d'inférence (29) à l'aide de la fonction de distribution (28, 65) et compte tenu de l'indication de reconstruction (242) ;
- génération d'au moins un module de défense (16) basé sur l'IA pour l'unité (30) basée sur l'IA à l'aide de ladite au moins une configuration d'inférence (29), ledit au moins un module de défense (16) basé sur l'IA étant en particulier conçu afin de, pour un jeu de données d'entrée (5, 14) de l'unité (30) basée sur l'IA :
• déterminer si une attaque de l'unité (30) basée sur l'IA peut être attribuée au jeu de données d'entrée (5, 14) ; et
• déterminer, à l'aide de la transformation de données, un deuxième jeu de données d'entrée (14) auquel aucune attaque de l'unité (30) basée sur l'IA ne peut être attribuée.

11. Procédé destiné à empêcher une attaque d'une unité (30) basée sur l'IA, présentant les étapes suivantes :
- génération d'au moins un module de défense (16) basé sur l'IA selon la revendication 10 ;
- détermination, à l'aide dudit au moins un module de défense (16) basé sur l'IA du fait qu'une attaque de l'unité (30) basée sur l'IA peut être attribuée à un jeu de données d'entrée (5, 14) de l'unité (30) basée sur l'IA ; et/ou
- détermination, à l'aide dudit au moins un module de défense (16) basé sur l'IA, d'un deuxième jeu de données d'entrée (14), auquel aucune attaque de l'unité (30) basée sur l'IA ne peut être attribuée et utilisation du deuxième jeu de données d'entrée (14) lors d'une régression et/ou d'une classification.

12. Procédé selon la revendication 11, **caractérisé par**
- la réception d'une définition cible (12), en particulier personnalisée ;
- détermination de la configuration d'inférence (29) compte tenu de la définition cible (12) ;
- choix, compte tenu de la définition cible (12), du fait qu'une
• détermination du fait qu'une attaque de l'unité (30) basée sur l'IA peut être attribuée au jeu de données d'entrée (5, 14) et/ou
• détermination, à l'aide de la transformation de données, d'un deuxième jeu de données d'entrée (14) auquel aucune attaque de l'unité (30) basée sur l'IA ne peut être attribuée
est/sont exécutées.

13. Support d'enregistrement lisible par ordinateur, qui contient des instructions qui permettent à au moins un processeur d'implémenter un procédé selon l'une des revendications 10 à 12, lorsque les instructions sont exécutées par ledit au moins un processeur.
